# EUROPEAN PATENT APPLICATION

(11) **EP 4 706 428 A1**
(43) Date of publication of application: **11.03.2026**
(21) Application number: 24806413.1
(22) Date of filing: 07.05.2024
(51) Int. Cl.: A24F 40/50, A24F 40/57

(54) **CONTROL METHOD FOR AEROSOL GENERATING DEVICE AND AEROSOL GENERATING DEVICE**

(30) Priority: 12.05.2023 CN 202310541389
(71) Applicant: Shenzhen First Union Technology Co., Ltd., Shenzhen, Guangdong 518000 (CN)
(72) Inventor: YANG, Chengque, Shenzhen, Guangdong 518000 (CN); XIAO, Jianxin, Shenzhen, Guangdong 518000 (CN); XU, Zhongli, Shenzhen, Guangdong 518000 (CN); LI, Yonghai, Shenzhen, Guangdong 518000 (CN)
(74) Representative: Ran, Handong
(86) International application number: PCT/CN2024/091506
(87) International publication number: WO 2024/235059

(57) **Abstract**

The present application provides a control method for an aerosol generating device and an aerosol generating device. The aerosol generating device comprises a heater for heating an aerosol generating product to generate an aerosol. The method comprises: receiving a starting request signal, the starting request signal being a signal for requesting to start a heater to heat the aerosol generating product; determining that an aerosol generating device is in a warm starting state; determining a starting parameter according to cooling information and heating information, the starting information comprising at least one of a target starting moment of the heater and a target starting temperature of the heater, wherein the cooling information is information of changes of the temperature of the heater along with time after the heater is turned off, and the heating information is information of changes of the temperature of the heater along with time when the aerosol generating device is started from a cold starting state; and starting the heater according to the starting parameter. The present application ensures a relatively good vaping taste.

## Description

### CROSS-REFERENCE TO RELATED APPLICATIONS

This application claims priority to Chinese Patent Application No. 202310541389.X, filed with the China National Intellectual Property Administration on May 12, 2023 and entitled "CONTROL METHOD FOR AEROSOL GENERATING DEVICE AND AEROSOL GENERATING DEVICE", which is incorporated herein by reference in its entirety.

### TECHNICAL FIELD

This application relates to the field of aerosol generating device technologies, and specifically, to a control method for an aerosol generating device and an aerosol generating device.

### BACKGROUND

With the popularity of aerosol generating devices, various aerosol generating devices with different heating manners are also widely used in the market. The aerosol generating devices typically have two starting modes: a cold starting mode and a warm starting mode. However, in an existing aerosol generating device, regardless of whether the aerosol generating device is in the cold starting mode or the warm starting mode, a heater is immediately controlled to heat after the aerosol generating device is started. This control manner leads to a large difference in taste between a cold starting scenario and a warm starting scenario, severely affecting user experience.

### SUMMARY

Embodiments of this application provide a control method for an aerosol generating device and an aerosol generating device, to solve a problem of a large difference in smoking taste.

According to an aspect of this application, a control method for an aerosol generating device is provided, the aerosol generating device includes a heater, the heater is configured to heat an aerosol generating product to generate an aerosol, and the method includes: receiving a starting request signal, where the starting request signal is a signal requesting to start the heater to heat the aerosol generating product; determining that the aerosol generating device is in a warm starting state; determining a starting parameter based on cooling information and heating information, where the starting parameter includes at least one of a target starting time of the heater and a target starting temperature of the heater, the cooling information is information about a temperature of the heater changing with time after the heater is turned off, and the heating information is information about a temperature of the heater changing with time in a case that the aerosol generating device starts to be started in a cold starting state; and starting the heater based on the starting parameter.

In some embodiments, the determining that the aerosol generating device is in a warm starting state includes: obtaining turn-off duration of the heater, where the turn-off duration is a time interval between reception time of the starting request signal and last turn-off time of the heater; and determining, based on the turn-off duration, that the aerosol generating device is in the warm starting state.

In some embodiments, the determining, based on the turn-off duration, that the aerosol generating device is in the warm starting state include: in a case that the turn-off duration is less than a preset time threshold, determining that the aerosol generating device is in the warm starting state.

In some embodiments, the obtaining turn-off duration of the heater includes: in a case that the heater is turned off, periodically waking up a micro control unit (MCU) to obtain the turn-off time; and in a case that the starting request signal is received, determining the turn-off duration based on the reception time of the starting request signal and the turn-off time.

In some embodiments, the method further includes: obtaining temperatures of the heater within the turn-off duration to obtain a plurality of collected temperatures, and obtaining collection time points corresponding to the collected temperatures; and determining the cooling information based on the plurality of collection time points and the plurality of corresponding collected temperatures.

In some embodiments, the method further includes: in a case that the aerosol generating device starts to be started from the cold starting state, obtaining a curve of the temperature of the heater changing with time during a preheating stage, and obtaining the heating information, where the temperature of the heater is positively correlated with operating duration during the preheating stage.

In some embodiments, the determining a starting parameter based on cooling information and heating information includes: determining, based on the cooling information, temperatures of the heater at a plurality of time points starting from receiving the starting request signal, to obtain first time points and corresponding first temperatures; in a case that the starting request signal is received and the heater starts to be started from the cold starting state, determining, based on the heating information, temperatures of the heater at a plurality of time points, to obtain second time points and corresponding second temperatures; and determining a time point at which one of the first temperatures is the same as one of the second temperatures or a corresponding first time point is the same as a corresponding second time point as the target starting time, and determining the first temperature or the second temperature corresponding to the target starting time as the target starting temperature.

In some embodiments, the starting the heater based on the starting parameter includes one of the following: in a case that a current time reaches the target starting time, starting the heater, to enable the temperature of the heater to change based on a preset first temperature curve; and in a case that the temperature of the heater reaches the target starting temperature, starting the heater, to enable the temperature of the heater to change based on the first temperature curve.

In some embodiments, the method further includes: determining that the aerosol generating device is in the cold starting state; and starting the heater, to enable the heater to change based on a second temperature curve, where a part of the second temperature curve coincides with the first temperature curve.

According to another aspect of this application, an aerosol generating device is further provided and includes: a heater, where the heater is configured to heat an aerosol generating product to generate an aerosol; and one or more processors, a memory, and one or more programs, where the one or more programs are stored in the memory and configured to be executed by the one or more processors, and the one or more programs include instructions used for performing any method.

By applying the technical solution of this application, in a case that a starting request signal is received and an aerosol generating device is in a warm starting state, a starting time and/or a starting temperature corresponding to the aerosol generating device in the warm starting state are determined based on a situation that a temperature of a heater changes with time after the heater is turned off and a situation that a temperature of the heater changes with time when the aerosol generating device starts to be started in a cold starting state, to control starting of the heater based on the starting time and/or the starting temperature. A same heating curve may be used for the warm starting state and the cold starting state, except that the heater is started with a delay in the warm starting state, ensuring that a smoking taste in the warm starting state is substantially the same as a smoking taste in the cold starting state, and ensuring a good taste.

### BRIEF DESCRIPTION OF THE DRAWINGS

A part of appended drawings forming this application illustrated herein are intended to provide further understanding of this application, and schematic embodiments of this application and descriptions thereof are intended to explain this application and do not constitute undue qualification of this application. In the accompany drawings:
FIG. 1 is a schematic structural diagram of an aerosol generating device according to an embodiment of this application;
FIG. 2 is a schematic structural diagram of another aerosol generating device according to an embodiment of this application;
FIG. 3 is a schematic flowchart of a control method for an aerosol generating device according to an embodiment of this application;
FIG. 4 is a curve diagram representing heating information according to an embodiment of this application;
FIG. 5 is a curve diagram representing cooling information according to an embodiment of this application; and
FIG. 6 is an intersection diagram of a cooling curve diagram and a heating curve diagram according to an embodiment of this application.

The accompany drawings include the following reference numerals:
10: Battery cell; 20: Main board; 30: Heater; 40: Chamber; 50: Coil; 100: Aerosol generating device; and 200: Aerosol generating product.

### DETAILED DESCRIPTION

It should be noted that, embodiments in this application and features in the embodiments may be mutually combined in a case that no conflict occurs. This application is described in detail below with reference to the accompanying drawings and in combination with embodiments.

To make a person skilled in the art better understand solutions of this application, technical solutions in the embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

It should be noted that, the terms "first" and "second" in the descriptions and claims of this application and the foregoing accompanying drawings are used to distinguish between similar objects, but are not necessarily used to describe a specific order or sequence. It may be understood that, data used in such a way is interchangeable in proper circumstances, so that the embodiments of this application described herein can be implemented. In addition, the terms "include", "have", and any other variants thereof mean to cover the non-exclusive inclusion. For example, a process, method, system, product, or device that includes a list of steps or units is not necessarily limited to those steps or units that are clearly listed, but may include other steps or units not expressly listed or inherent to such a process, method, system, product, or device.

As introduced in the background, a control manner of an aerosol generating device in the prior art results in a poor smoking taste. To solve the foregoing problem, the embodiments of this application provide a control method for an aerosol generating device and an aerosol generating device.

The following clearly and completely describes the technical solutions in embodiments of the present invention with reference to the accompanying drawings in the embodiments of the present invention.

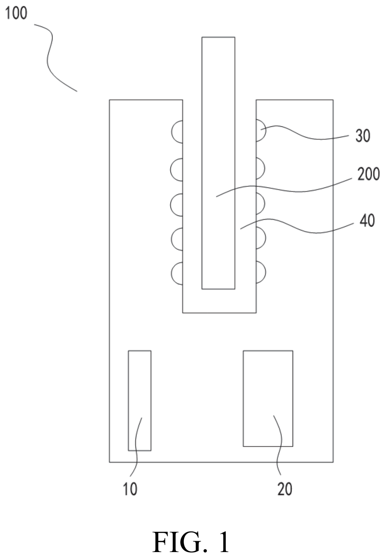

FIG. 1 is a schematic structural diagram of an aerosol generating device 100 according to an embodiment of the present invention. The aerosol generating device 100 includes a battery cell 10, a main board 20, and a heater 30. A controller of the aerosol generating device 100 is disposed on the main board 20. The battery cell 10 and the heater 30 are electrically connected to the controller respectively, so that the controller can control the battery cell 10 to supply electrical energy to the heater 30. The aerosol generating device 100 is further provided with a longitudinally extending chamber 40. The chamber 40 is configured to accommodate an aerosol generating product 200 used in conjunction with the aerosol generating device 100. The heater 30 is attached to an outer wall of the chamber 40 to heat the aerosol generating product 200 in the chamber 40. Some active substances filled in the aerosol generating product 200 are heated and then volatilizes to generate smoke. A user can inhale the smoke by inhaling on the aerosol generating product 200. In some embodiments, at least a part of the heater 30 extends into the chamber 40, and an end portion of the heater 30 that extends into the chamber 40 is constructed into a pin shape or a sheet shape, so that the heater 30 is smoothly inserted into the aerosol generating product 200 for heating.

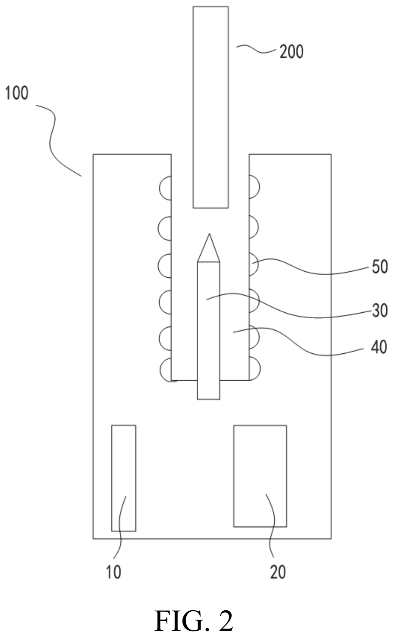

In some embodiments, the aerosol generating device 100 may heat the aerosol generating product 200 in an electromagnetic induction heating manner. As shown in FIG. 2, a coil 50 is wound around the outer wall of the chamber 40. The battery cell 10 supplies an alternating current to the coil 50. The coil 50 generates a changing magnetic field under the action of the alternating current. The changing magnetic field penetrates the heater 30, thereby enabling the heater 30 to induce an eddy current. The heater 30 generates heat under the action of an eddy effect and a magnetic hysteresis effect, thereby heating the aerosol generating product 200. In some embodiments, the heater may include a resistance material. The resistance material can generate Joule heat when conducting electricity. In some embodiments, the heater may further include an infrared electrothermal coating. The infrared electrothermal coating can generate thermal energy when energized, thereby generating an infrared ray of a specific wavelength, for example, an infrared ray ranging from 0.75 µm to 1000 µm. In some embodiments, the heater may be configured to directly heat the aerosol generating product 200, or may be configured to heat air in an airflow channel, to heat the air flowing through the airflow channel into high-temperature air. The high-temperature air then enters the aerosol generating product and exchanges heat with the aerosol generating product, thereby heating and baking the aerosol generating product.

In this embodiment, a control method running on the aerosol generating device is provided. It should be noted that, although steps shown in the flowchart of the accompanying drawings illustrate a logical sequence, in some cases, the steps shown or described may be performed in a sequence different from that described herein.

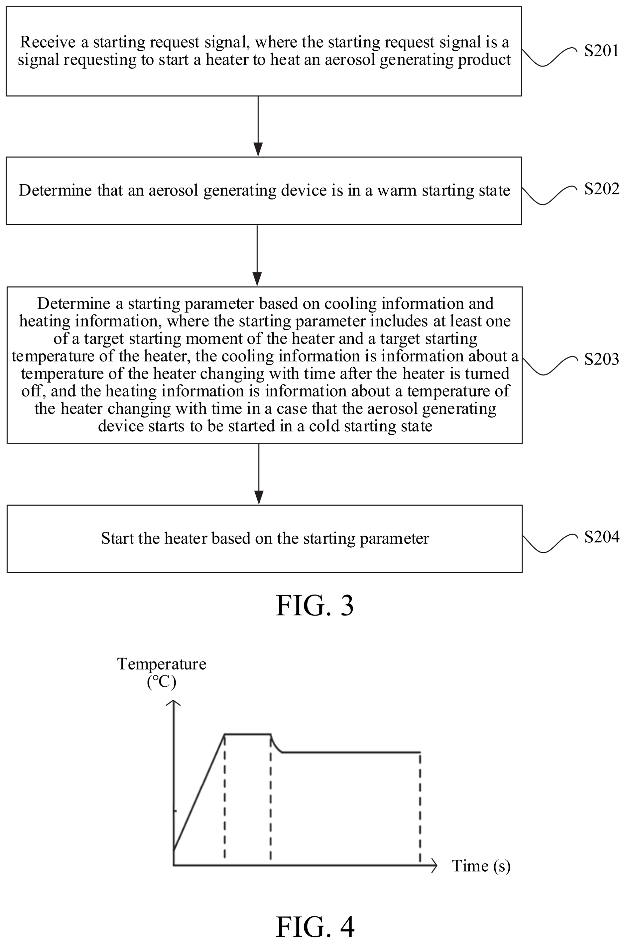

FIG. 3 is a flowchart of a control method for an aerosol generating device according to an embodiment of this application. As shown in FIG. 3, the method includes the following steps:
Step S201: Receive a starting request signal, where the starting request signal is a signal requesting to start a heater to heat an aerosol generating product.

Specifically, the starting request signal may include an instruction signal generated through triggering performed by a user by driving a trigger module, for example, the starting request signal is generated through button pressing, screen touch, and the like; the starting request signal may further include a signal triggered through automatically sensing insertion of the aerosol generating device performed by a sensor, for example, a pressure sensor, a color sensor, or an infrared sensor is used to sense whether the aerosol generating device is inserted; and the starting request signal may further include a signal triggered through automatically sensing the insertion of the aerosol generating device through detection of a change of an electrical signal, for example, an induction change, a voltage change, a current, a voltage, and the like are detected to sense whether the aerosol generating device is inserted.

Step S202: Determine that an aerosol generating device is in a warm starting state.

Specifically, before the starting request signal is received, the heater is in a turn-off state. As a turned-off duration lengthens, a temperature of the heater gradually drops. The longer interval duration from a last turn-off to current reception of the starting request signal, that is, the longer the turn-off duration, the greater a temperature drop of the heater, and the lower the temperature of the heater or the temperature has reached a room temperature.

The warm starting state refers to a case that when the aerosol generating device is started, although a period of time has passed since the last turn-off of the heater, in this case, the temperature of the heater is greater than a first preset temperature, which may also be understood as that when the starting request signal is received, a residual temperature of the heater is still high.

Step S203: Determine a starting parameter based on cooling information and heating information, where the starting parameter includes at least one of a target starting time of the heater and a target starting temperature of the heater, the cooling information is information about a temperature of the heater changing with time after the heater is turned off, and the heating information is information about a temperature of the heater changing with time in a case that the aerosol generating device starts to be started in a cold starting state.

Specifically, the target starting time is a starting time of the heater after the starting request signal is received, and the target starting temperature is a starting temperature of the heater after the starting request signal is received. Since the temperature of the heater gradually drops as the turn-off duration lengthens after the heater is turned off, the obtained information about the temperature of the heater changing with time after the last turn-off is the cooling information.

The cold starting state refers to a case that when the aerosol generating device is started, a period of time has passed since the last turn-off of the heater, and in this case, the temperature of the heater drops to be less than or equal to a second preset temperature, where the second preset temperature is less than or equal to the first preset temperature. This case may also be understood as that the residual temperature of the heater is low or the residual temperature of the heater is restored to the room temperature when the starting request signal is received.

Step S204: Start the heater based on the starting parameter.

Specifically, a timing for starting the heater is determined based on the target starting time and/or the target starting temperature. In other words, in a case that the starting request signal is received, and a current starting state is the warm starting state, the heater is not started immediately, but the heater is started in a delayed manner, to reduce heating duration of the heater in the warm starting state.

According to this embodiment, a starting request signal requesting to start a heater is first received; then a starting parameter is determined based on cooling information representing a temperature of the heater changing with time after the heater is turned off in a case that an aerosol generating device is in a warm starting state and based on heating information representing a temperature of the heater changing with time in a case that the aerosol generating device starts to be started in a cold starting state, where the starting parameter includes a starting time and/or a starting temperature; and finally, the heater is turned on based on the starting parameter. In this application, in a case that a starting request signal is received and an aerosol generating device is in a warm starting state, a starting time and/or a starting temperature corresponding to the aerosol generating device in the warm starting state are determined based on a situation that a temperature of a heater changes with time after the heater is turned off and a situation that a temperature of the heater changes with time when the aerosol generating device starts to be started in a cold starting state. Since a heating curve of the heater for the warm starting state is substantially the same as a heating curve of the heater for the cold starting state, in this embodiment of this application, the starting time and/or the starting temperature are monitored to control the heater to be started with a delay, thereby ensuring that a smoking taste in the warm starting state is substantially the same as a smoking taste in the cold starting state, and ensuring a good taste.

In some embodiments, the determining that an aerosol generating device is in a warm starting state includes: obtaining turn-off duration of the heater, where the turn-off duration is a time interval between reception time of the starting request signal and last turn-off time of the heater; and determining, based on the turn-off duration, that the aerosol generating device is in the warm starting state. In this embodiment, whether the current starting state of the aerosol generating device is the warm starting state is determined by using the turn-off duration, so that not only whether the aerosol generating device is in the warm starting state can be accurately determined, but also dependency on a temperature sensor can be eliminated.

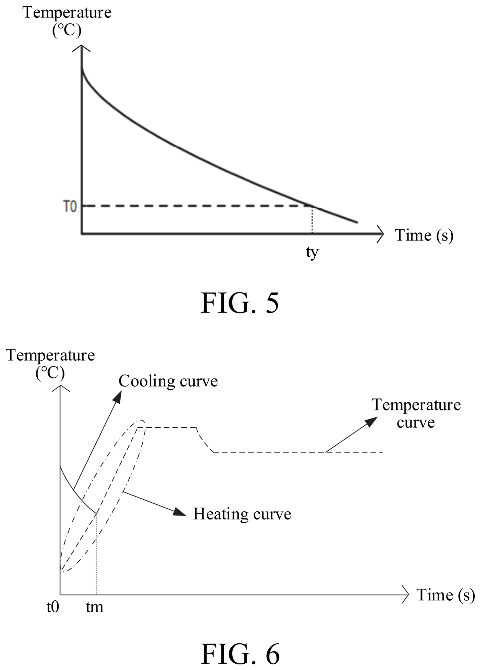

To further ensure accuracy of determining the starting state of the aerosol generating device, further, the determining, based on the turn-off duration, that the aerosol generating device is in the warm starting state includes: in a case that the turn-off duration is less than a preset time threshold (for example, an identifier ty in FIG. 5), determining that the aerosol generating device is in the warm starting state. In a case that it is determined that the turn-off duration is less than the preset time threshold, it indicates that the turn-off duration of the heater is short. In this case, the corresponding temperature of the heater is high, so that it can be accurately determined that the aerosol generating device is in the warm starting state.

According to another specific embodiment of this application, the obtaining turn-off duration of the heater includes: in a case that the heater is turned off, periodically waking up an MCU to obtain the turn-off time; and in a case that the starting request signal is received, determining the turn-off duration based on the reception time of the starting request signal and the turn-off time. In this embodiment, the MCU is periodically woken up to obtain the turn-off time of the heater, to determine the turn-off duration, thereby avoiding a problem of energy waste caused by the MCU in a long-term operating state, and saving energy.

In an actual application, a person skilled in the art may preset the cooling information, for example, temperatures of the heater within the turn-off duration are obtained to obtain a plurality of collected temperatures, and collection time points corresponding to the collected temperatures are obtained; and the cooling information is determined based on the plurality of collection time points and the plurality of corresponding collected temperatures. Specifically, a plurality of sets of historical cooling information may further be obtained, and each set of historical cooling information includes: a plurality of first historical time points of the heater and corresponding first historical temperatures in a case that the heater is historically turned off; the plurality of sets of historical cooling information are processed, to obtain processed information, where processing includes one of the following: taking an average, taking a mode, and taking a median; and a relationship function between the first historical time point and the first historical temperature is established based on the processed information, to obtain the cooling information. In this embodiment, the historical cooling information is used as the cooling information that is obtained after the heater is turned off last time from the starting request signal. Specifically, in a case that the heater is historically turned off, a plurality of sets of data of the first historical temperature of the heater changing with the first historical time point are obtained, and taking an average, taking a mode, or taking a median is performed on the plurality of sets of data, to ensure that the obtained processed information is accurate. Then, the relationship function between the first historical time point and the first historical temperature is established. The relationship function is the cooling information. The current cooling information does not need to be tested by using the temperature sensor, thereby implementing control of the aerosol generating device without depending on the temperature sensor. Further, it is ensured that costs of controlling the aerosol generating device are low.

Specifically, averaging processing refers to averaging a plurality of historical temperatures at a same historical time point. A manner of taking a mode or taking a median may be used. The historical time point may be an actual time point, or may be a plurality of relative historical time values obtained by using a starting time at which the aerosol generating device is historically turned off.

Certainly, a manner of obtaining the cooling information is not limited to the manner, and the cooling information may alternatively be obtained in another manner. For example, the method further includes the following steps: obtaining historical cooling information, where the historical cooling information includes a plurality of first historical time points of the heater and corresponding first historical temperatures in a case that the heater is historically turned off; and establishing a relationship function between the first historical time point and the first historical temperature based on the first historical time point and the corresponding first historical temperature, to obtain the cooling information. The historically collected data of a temperature of the heater of the aerosol generating device changing with time after the aerosol generating device is turned off is used as calculation data of the relationship function. In this way, the cooling information can be obtained simply and quickly, thereby simplifying a process of obtaining the cooling information.

For another example, the method may further include: collecting a temperature of the heater within the turn-off duration at a preset interval duration to obtain a plurality of collected temperatures, and recording corresponding collection time points; and establishing a relationship function between the collection time point and the collected temperature based on the plurality of collection time points and the plurality of corresponding collected temperatures, to obtain the cooling information. In this embodiment, the cooling information is obtained by collecting, in real time, a situation that an actual temperature of the heater changes with time within the turn-off duration, to ensure that the obtained cooling information is accurate, thereby further ensuring that the target starting time subsequently determined based on the cooling information and the heating information is accurate.

For another example, a method of obtaining the cooling information may further be: establishing an initial neural network model; obtaining a plurality of sets of historical cooling information, where each set of historical cooling information includes a plurality of first historical time points of the heater and corresponding first historical temperatures in a case that the heater is historically turned off, and different sets of first historical time points correspond to a same turn-off time of the aerosol generating device; training the initial neural network model by using the plurality of sets of historical cooling information, to obtain a neural network model, where an input of the neural network model is a time, and an output of the neural network model is a temperature; and after each time corresponding to the turn-off duration is converted, sequentially inputting each time into the neural network model, to obtain a temperature value corresponding to each time, and obtaining the cooling information representing a relationship function between a time and a temperature based on each time and a temperature value thereof, where conversion is an operation of unifying each time within the turn-off duration to the turn-off time that is the same as a historical time point.

The relationship function between the time and the temperature may be a function established by using the time as an independent variable and the temperature as a dependent variable, or may be a function established by using the temperature as an independent variable and the time as a dependent variable.

It should be noted that, the cooling information is not limited to a form of a relationship function, and the cooling information may alternatively be presented in a form of a relationship curve. In other words, after the processed information is obtained, a curve diagram of a historical time and a historical temperature shown in FIG. 5 may further be drawn based on the processed information. The curve diagram is the cooling information. Alternatively, after a plurality of collected temperatures are collected and corresponding collection time points are recorded, a relationship curve between the collection time point and the collected temperature shown in FIG. 5 may further be drawn based on the plurality of collection time points and the plurality of corresponding collected temperatures. The curve diagram shows the cooling information, where T0 is a preset temperature and ty is a preset time threshold.

In another optional solution, the method further includes: in a case that the aerosol generating device starts to be started from the cold starting state, obtaining a curve of the temperature of the heater changing with time during a preheating stage, and obtaining the heating information, where the temperature of the heater is positively correlated with operating duration during the preheating stage. In other words, the heating information of this application only includes a situation that the temperature of the heater changes with time during the preheating stage. Because the situation that the temperature of the heater changes with time during an inhalation stage is the same regardless of whether the heater is in the cold starting state or the warm starting state, and only a starting point is different, the heating information only needs to obtain the situation that the temperature of the heater changes with time during the preheating stage, thereby ensuring a small data calculation and processing amount, and simplifying data processing and calculation in a control process.

Further, an implementation of obtaining a curve of the temperature of the heater changing with time during the preheating stage in a case that the aerosol generating device starts to be started from the cold starting state, to obtain the heating information, or an implementation of obtaining a temperature curve of the heater throughout an entire heating stage may be: obtaining a plurality of sets of historical heating information, where each set of historical heating information includes a plurality of second historical time points of the heater and corresponding second historical temperatures in a case that the aerosol generating device is in the cold starting state and starts to be started; performing one of taking an average, taking a mode, and taking a median on the plurality of sets of historical heating information, to obtain processed heating information; and establishing a relationship function between the second historical time point and the second historical temperature based on the processed heating information, to obtain the heating information.

According to another optional embodiment of this application, the determining a starting parameter based on cooling information and heating information includes the following steps:
Step S2041: Determine, based on the cooling information, temperatures of the heater at a plurality of time points starting from receiving the starting request signal, to obtain first time points and corresponding first temperatures.
Step S2042: In a case that the starting request signal is received and the heater starts to be started from the cold starting state, determine, based on the heating information, temperatures of the heater at a plurality of time points, to obtain second time points and corresponding second temperatures.
Step S2043: Determine a time point at which one of the first temperatures is the same as one of the second temperatures or a corresponding first time point is the same as a corresponding second time point as the target starting time, and determine the first temperature or the second temperature corresponding to the target starting time as the target starting temperature.

In some embodiments, a corresponding time point when the first temperature is the same as the second temperature is used as the target starting time of the heater in the warm starting state, and the first temperature or the second temperature corresponding to the target starting time is used as the target starting temperature. In a case that the heater is started in the warm starting state, a time point corresponding to the starting temperature of the heater when a starting signal of an electronic cigarette is received and the heater is in the cold starting state is simulated, thereby further ensuring that a temperature trend of the heater in the warm starting state can match a temperature trend of the heater in the cold starting state, and further achieving an effect that a smoking taste of the electronic cigarette is substantially consistent regardless of whether the heater is in the cold starting state or the warm starting state. In addition, the target starting time is later than a reception time of the starting signal, which is equivalent to that the heater cools for a period of time after the starting signal is received. In this way, it also avoided that the temperature of the heater is excessively high when the heater is started, and fumes of the aerosol generating product that is heated by the heater are excessively hot, resulting in a problem of mouth waving due to excessively hot fumes, thereby further ensuring a sense of use experience of the user.

To further implement flexible control of starting the heater, specifically, the starting the heater based on the starting parameter includes one of the following: in a case that a current time reaches the target starting time, starting the heater, to enable the temperature of the heater to change based on a preset first temperature curve; and in a case that the temperature of the heater reaches the target starting temperature, starting the heater, to enable the temperature of the heater to change based on the first temperature curve. In other words, in this application, the heater may be started only when the current time reaches the target starting time, or the heater may be started only when the temperature of the heater reaches the target starting temperature, or the heater may be started when the current time reaches the target starting time and when the temperature of the heater reaches the target starting temperature.

The cooling information is a relationship function that represents a cooling temperature and time. An implementation of step S2041 may be: starting from receiving the starting request signal, substituting each first time point of the heater into the relationship function, and calculating the corresponding first temperature of each first time point.

The heating information is a relationship function that represents a heating temperature and time. An implementation of step S2042 may be: in a case that the starting request signal is received and the heater starts to be started from the cold starting state, substituting each second time point of the heater into the relationship function, and calculating the corresponding second temperature of each second time point.

In step S2043, the first temperatures and the second temperatures may be compared one by one, to obtain a plurality of same first temperatures and second temperatures, and whether first time points and second time points that correspond to the same first temperatures and second temperatures are the same is determined. If the first time points and the second time points that correspond to the same first temperatures and second temperatures are the same, the target temperature may be obtained. Alternatively, a curve diagram of a change of the first temperature with the first time point may be drawn based on the first temperature and the first time point, to obtain a cooling curve diagram shown in FIG. 6; and a curve diagram of a change of the second temperature with the second time point may be drawn based on the second temperature and the second time point, to obtain a heating curve diagram shown in FIG. 6. A time corresponding to an intersection point of the cooling curve diagram and the heating curve diagram is a target starting time tm. It can be known according to FIG. 4 and FIG. 6 that, a trend of the second temperature with the second time point is the same as a trend of a temperature in the heating information with time, and a difference between the two trends lies only in a difference of a collection time point.

In addition to the warm starting state, the aerosol generating device further includes a cold starting state, and the method further includes: determining that the aerosol generating device is in the cold starting state; starting the heater, to enable the heater to change based on a second temperature curve, where a part of the second temperature curve coincides with the first temperature curve. In a case that the current starting state is the cold starting state, because the current temperature of the heater is low, to avoid a problem that delayed starting of the heater causes excessively cool fumes obtained through initial heating, starting delay is no longer performed, and the heater is immediately started. In other words, when the aerosol generating device is in the cold starting state, the heater is immediately started as soon as the starting request signal is received, thereby further ensuring a good taste of the aerosol generating device.

Specifically, a part of the second temperature curve that does not coincide with the second temperature curve is the temperature curve of the heater during a delayed starting period in the warm starting state. In a case that the current starting state is the cold starting state, it indicates that a temperature drop of the heater is large when the starting signal is received, and the residual temperature of the heater is low.

In some embodiments, the determining that the aerosol generating device is in the cold starting state includes: obtaining turn-off duration of the heater, where the turn-off duration is a time interval between reception time of the starting request signal and last turn-off time of the heater; and determining, based on the turn-off duration, that the aerosol generating device is in the cold starting state. In this embodiment, whether the current starting state of the aerosol generating device is the cold starting state is determined through the turn-off duration, so that not only whether the aerosol generating device is in the cold starting state can be accurately determined, but also dependency on a temperature sensor can be eliminated.

To further ensure accuracy of determining the starting state of the aerosol generating device, further, the determining, based on the turn-off duration, that the aerosol generating device is in the cold starting state includes: in a case that the turn-off duration is greater than or equal to a preset time threshold (for example, an identifier ty in FIG. 5), determining that the aerosol generating device is in the cold starting state. In a case that it is determined that the turn-off duration is greater than or equal to the preset time threshold, it indicates that the turn-off duration of the heater is long. In this case, the corresponding temperature of the heater is low, so that it can be accurately determined that the aerosol generating device is in the cold starting state.

In an actual application process, regulation of the heater of the aerosol generating device includes a preheating stage and an inhalation stage, which are specifically described as follows:
A first stage may be the preheating stage. As used in this specification, the preheating stage refers to a stage in which a temperature of an aerosol generating material is increased to reach a temperature at which a satisfactory amount of aerosol is generated. During the preheating stage, a battery cell of the aerosol generating device supplies high power to supply power to the heater, so that the heater rapidly heats the aerosol generating product to a predetermined temperature, increasing the temperature of the aerosol generating material to reach the temperature at which the satisfactory amount of aerosol is generated. Although the aerosol is generated during the preheating stage, the aerosol is usually not inhaled out of the device by the user. At the end of the first (preheating) stage, tobacco stems and solid tobacco included in the tobacco stems may have reached a temperature at which volatile components included in the tobacco are released.

The first stage may have any suitable duration. The first stage may have predetermined duration. The duration of the first stage may be equal to or less than one minute. The duration of the first stage may be equal to or less than 45 seconds. The duration of the first stage may be approximately 30 seconds. If the duration of the first stage is approximately 30 seconds, a good balance between a preheating speed and an energy loss reduction can be achieved. During the first stage, the power supplied to the heater may be increased stepwise. The power supplied to the heater may be increased by changing a duty cycle of the power supplied to the heater. During the first stage, maximum power may be supplied to the heater; and during the first stage, fixed power may be supplied to the heater. During the first stage, the power supplied to the heater may depend on the target temperature and time that are set by the controller.

When the first stage ends, a second stage (inhalation stage) begins, and the power supplied to the heater is controlled to reduce the temperature of the heater to the second temperature lower than the first temperature. During the second stage, the battery cell uses small heating power to maintain the temperature of the aerosol generating product, so that the aerosol can be generated by the device at a satisfactory rate and can be inhaled by the user. In a case that an allowable temperature range is defined, the second temperature is within the allowable temperature range. It is generally desirable to reduce the temperature of the heater during the second stage, because after the aerosol generating device is heated and the temperature of the aerosol generating material increases for a period of time, at a given temperature of the heater, condensation of the aerosol in the device is usually reduced and delivery of the aerosol is usually increased. In addition, the temperature drop of the heater reduces an amount of energy consumed by the aerosol generating device, and changing of the temperature of the heater in an operation duration of the device allows a time-modulated thermal gradient to be introduced into the aerosol generating material.

The heater may be any suitable heating device used in the aerosol generating device. In the embodiments of this application, the heater is a heating tube, and the foregoing temperatures are all inner wall temperatures of the heating tube.

To enable a person skilled in the art to more clearly understand the technical solution of this application, an implementation process of the control method for an aerosol generating device of this application is described in detail below in combination with a specific embodiment.

This embodiment relates to a specific control method for an aerosol generating device, including the following steps:
Step S1: Obtain pre-stored cooling information and pre-stored heating information, where the cooling information and the heating information are both pre-stored, the cooling information is a cooling curve drawn based on historical cooling information, and the heating information is a heating curve drawn based on historical heating information.
Step S2: Record a turn-off duration from turning off an aerosol generating device to receiving a current starting request signal, in a case that the turn-off duration is less than a preset time threshold, determine that a current starting state of the aerosol generating device is a warm starting state, and in a case that the turn-off duration is not less than the preset time threshold, determine that the current starting state of the aerosol generating device is a cold starting state.
Step S3: In a case that the aerosol generating device is in the cold starting state, upon receiving the starting request signal, control a heater to start to be started to heat an aerosol generating product.
Step S4: Determine, based on an intersection point of the cooling curve and the heating curve in a case that the aerosol generating device is in the warm starting state, that a time corresponding to the intersection point is a target starting time, and control, starting from receiving the starting request signal and when a current time reaches the target starting time, the heater to start to be started to heat the aerosol generating product.

It should be noted that, the steps shown in the flowcharts of the accompanying drawings may be performed in a computer system such as a set of computer executable instructions, and although a logic sequence is shown in the flowcharts, in some cases, the shown or described steps may be performed in a sequence different from the sequence herein.

According to another aspect of this application, an aerosol generating device is provided, including: a heater, where the heater is configured to heat an aerosol generating product to generate an aerosol; and further including one or more processors, a memory, and one or more programs, where the one or more programs are stored in the memory and configured to be executed by the one or more processors, and the one or more programs include instructions used for performing any method.

The processor includes a kernel, and the kernel invokes a corresponding program unit from the memory. One or more kernels may be provided, and kernel parameters are adjusted to at least solve the problem in the prior art that the control manner of the aerosol generating device results in a poor smoking taste.

The memory may include a non-permanent memory in a computer-readable medium, a random access memory (RAM), and/or a non-volatile memory, and other forms, such as a read-only memory (ROM) or a flash RAM. The memory includes at least one storage chip.

Obviously, a person skilled in the art should understand that the modules or steps of the present invention may be implemented by using a general computing device, the modules or steps may be centralized on a single computing device, or distributed on a network formed by a plurality of computing devices, and the modules or steps may be implemented by using program code executable by the computing device, so that the modules or steps may be stored in a storage device and executed by the computing device. In addition, in some cases, the shown or described steps may be performed in a sequence different from the sequence herein, or the steps are separately manufactured into each integrated circuit module, or a plurality of modules or steps in the modules and steps are manufactured into a single integrated circuit module for implementation. In this way, the present invention is not limited to any particular combination of hardware and software.

It should also be noted that the terms "include", "have", and any other variants mean to cover the non-exclusive inclusion. Therefore, a process, a method, an article, or a device that includes a series of elements not only include those elements, but also include other elements not clearly listed, or include the inherent elements of the process, the method, the article, and the device. Without more limitations, elements defined by the sentence "including one" does not exclude that there are still other same elements in the processes, methods, goods, or devices.

The foregoing descriptions are merely preferred embodiments of this application, but are not intended to limit this application. For a person skilled in the art, this application may have various modifications and changes. Any modification, equivalent replacement, or improvement made within the spirit and principle of this application shall fall within the protection scope of this application.

## Claims

1. A control method for an aerosol generating device, wherein the aerosol generating device comprises a heater configured to heat an aerosol generating product to generate an aerosol, and the method comprises:
receiving a starting request signal, wherein the starting request signal is a signal requesting to start the heater to heat the aerosol generating product;
determining that the aerosol generating device is in a warm starting state;
determining a starting parameter based on cooling information and heating information, wherein:
the starting parameter comprises at least one of a target starting time of the heater and a target starting temperature of the heater;
the cooling information is information about a temperature of the heater changing with time after the heater is turned off; and
the heating information is information about a temperature of the heater changing with time in a case that the aerosol generating device starts to be started from a cold starting state; and
starting the heater based on the starting parameter.

2. The method according to claim 1, wherein the determining that the aerosol generating device is in a warm starting state comprises:
obtaining turn-off duration of the heater, wherein the turn-off duration is a time interval between a reception time of the starting request signal and a last turn-off time of the heater; and
determining, based on the turn-off duration, that the aerosol generating device is in the warm starting state.

3. The method according to claim 2, wherein the determining, based on the turn-off duration, that the aerosol generating device is in the warm starting state comprises:
in a case that the turn-off duration is less than a preset time threshold, determining that the aerosol generating device is in the warm starting state.

4. The method according to claim 2, wherein the obtaining turn-off duration of the heater comprises:
in a case that the heater is turned off, periodically waking up a micro control unit to obtain the turn-off time; and
in a case that the starting request signal is received, determining the turn-off duration based on the reception time of the starting request signal and the turn-off time.

5. The method according to claim 2, further comprising:
obtaining temperatures of the heater within the turn-off duration to obtain a plurality of collected temperatures, and obtaining collection time points corresponding to the collected temperatures; and
determining the cooling information based on the plurality of collection time points and the plurality of corresponding collected temperatures.

6. The method according to claim 2, further comprising:
in a case that the aerosol generating device starts to be started from the cold starting state, obtaining a curve of the temperature of the heater changing with time during a preheating stage to obtain the heating information, wherein the temperature of the heater is positively correlated with operating duration of the heater during the preheating stage.

7. The method according to any one of claims 1 to 6, wherein the determining a starting parameter based on cooling information and heating information comprises:
determining, based on the cooling information, temperatures of the heater at a plurality of time points starting from receiving the starting request signal, to obtain first time points and corresponding first temperatures;
in a case that the starting request signal is received and the heater starts to be started from the cold starting state, determining, based on the heating information, temperatures of the heater at a plurality of time points, to obtain second time points and corresponding second temperatures; and
determining a time point at which one of the first temperatures is the same as one of the second temperatures or a corresponding first time point is the same as a corresponding second time point as the target starting time, and determining the first temperature or the second temperature corresponding to the target starting time as the target starting temperature.

8. The method according to any one of claims 1 to 6, wherein the starting the heater based on the starting parameter comprises one of the following:
in a case that a current time reaches the target starting time, starting the heater, to enable the temperature of the heater to change based on a preset first temperature curve; and
in a case that the temperature of the heater reaches the target starting temperature, starting the heater, to enable the temperature of the heater to change based on the first temperature curve.

9. The method according to claim 8, further comprising:
determining that the aerosol generating device is in the cold starting state; and
starting the heater, to enable the heater to change based on a second temperature curve, wherein a part of the second temperature curve coincides with the first temperature curve.

10. An aerosol generating device, comprising:
a heater, configured to heat an aerosol generating product to generate an aerosol;
one or more processors;
a memory; and
one or more programs,
wherein the one or more programs are stored in the memory and configured to be executed by the one or more processors, and the one or more programs comprise instructions configured to perform the method according to any one of claims 1 to 9.
